# EUROPEAN PATENT SPECIFICATION

(11) **EP 1 028 840 B1**
(45) Date of publication and mention of the grant of the patent: **02.10.2002**
(21) Application number: 98952863.3
(22) Date of filing: 05.11.1998
(51) Int. Cl.: B29C 51/14, B32B 31/20

(54) **METHOD OF MAKING AN ACRYLIC ARTICLE**
VERFAHREN ZUM HERSTELLEN EINES PRODUKTES AUS ACRYLHARZ
PROCEDE DE FABRICATION D'UN ARTICLE EN ACRYLIQUE

(30) Priority: 06.11.1997 ZA 9709987
(43) Date of publication of application: 23.08.2000
(73) Proprietor: Lucite International UK Limited, Southampton, Hampshire SO14 3BP (GB)
(72) Inventor: TINKER, Paul, Johannesburg 2059 (ZA)
(74) Representative: Walsh, David Patrick
(86) International application number: GB9803323
(87) International publication number: WO99024237

(56) References cited:
- EP-A- 0 150 979
- EP-A- 0 202 930
- EP-A- 0 454 520
- EP-A- 0 582 249
- WO-A-89/03295
- WO-A-94/08787
- US-A- 5 069 851
- PATENT ABSTRACTS OF JAPAN vol. 013, no. 022 (M-786), 19 January 1989 & JP 63 233824 A (NIPPON STEEL CORP), 29 September 1988
- PATENT ABSTRACTS OF JAPAN vol. 009, no. 322 (M-440), 18 December 1985 & JP 60 157838 A (MEIWA SANGYO KK), 19 August 1985

## Description

### BACKGROUND OF THE INVENTION

This invention relates to a method of making an article of sanitary ware from a composite of a facing sheet of an acrylic material and a backing sheet of a thermoplastic material, such as for example a sink, bowl, basin or bath.

Currently, acrylic vacuum formed articles such as sanitary ware in the form of sinks, bowls, basins, baths, spas, and shower trays, are manufactured by vacuum forming an acrylic sheet and subsequently re-enforcing the back of the vacuum formed acrylic sheet with fibreglass, in order to achieve the required dimensional stability, impact resistance and stiffness.
In certain markets, the presence of fibreglass on the hack of an acrylic unit, particularly an acrylic sink unit where the underside is visible after installation, is disliked, as it is not cosmetically acceptable and has connotations of cheapness. In addition, the fibreglass tends to give off skin penetrating glass fibres.

One method of overcoming this method is to co-extrude ABS (an acrylonitrile-butadiene-styrene resin) onto a band cast acrylic sheet or extruded acrylic sheet to produce a flat laminate of ABS/acrylic. This laminate may then be vacuum formed into a desired article. The disadvantages of this method are as follows. Firstly, band cast or extruded acrylic sheets are of fairly low molecular weight and consequently do not have the inherent solvent chemical resistance of cross-linked cell cast acrylic sheets. or all of the desirable physical properties and surface finish of cell cast acrylic sheets. Secondly, as band casting is a large scale continuous process, band cast acrylic sheets are only available in a limited range of basic colours, whereas cell casting, being a batch process, is able to offer a wide range of custom tailored colours to match other, non-acrylic sanitaryware. Colours tend to be a matter of fashion and may change regularly as a consequence. Thirdly, the bond between the ABS and acrylic is difficult to break, and as the two plastics need to be separated for fully effective recycling, sanitary ware made from such laminates are not truly recyclable.

European Patent No 369207 teaches a method of thermoforming laminated structures by perforating all layers to be formed, except the layer outermost from the mould. Thus, the non-perforated layer is attracted to the mould, serving as a diaphragm for the other layers or consolidating therewith to form the desired article. This method is applicable to multiple layers of any thermoformable material, including thermoplastic resins of all types, illustrated by vinyl polymers, polyamides and polyesters.

Reference is also made to EP-A-0150979 which discloses a method of preparing laminated containers for food and the like by thermoforming different overlying polymeric sheets in a web without using adhesive, by heat fusing the web in the thermoforming areas to facilitate separation of the scrap material of the web into separate layers.

In US-A-5069851 continuous lamination of ABS and PMMA is achieved by employing a continuous sheet of PMMA optionally preheated on one side, and extruding a web of ABS onto the PMMA at the nip of a roll stack, where the two layers are compressed and gradually cooled.

Despite all the various methods known for manufacturing of articles from a composite of a facing sheet of an acrylic material and a backing sheet of a thermoplastic material, there is always a need for a new method for the production of such articles.

### SUMMARY OF THE INVENTION

According to the invention there is provided a method of making an article of sanitary ware from a composite of a facing sheet of an acrylic material and a backing sheet of a thermoplastic material other than an acrylic material, which method includes the steps of:
(a) heating each of the facing sheet and the backing sheet to a temperature within the vacuum forming range;
(b) after step (a) bringing the facing sheet and the backing sheet together between a nip to exclude any gasses trapped or formed between the two sheets and to bond the two sheets together to form the composite; and
(c) placing the composite in a vacuum forming mould and applying suitable conditions of pressure to mould the article from the composite.

By an acrylic material there is meant a thermoplastic polymer or copolymer of acrylic acid, methacrylic acid, esters of these acids, or acrylonitrile.

By a thermoplastic material there is meant a high polymer that softens when exposed to heat and returns to its original condition when cooled to room temperature.

The facing sheet of an acrylic material may be a band cast acrylic material or more preferably a cell cast acrylic material.

The backing sheet of a thermoplastic material may be a sheet of ABS, PVC (polyvinyl chloride), polypropylene, or polycarbonate, the preferred material being ABS. The use of an acrylic material for the backing sheet is specifically excluded.

The backing sheet may be internally filled with a reinforcing fibre such as glass fibre, or a particulate filler.

In step (a) each sheet is preferably heated to a temperature of from 135°C to 195°C inclusive, more preferably to a temperature of from 155°C to 175°C inclusive, for example in an oven such as a recirculating hot air oven, or by means of radiant heat or in any other suitable way.

In step (b) the facing sheet and the backing sheet are preferably brought together between a nip, for example between two rollers or between a roller and a flat bed, at an angle of between 35° and 45° inclusive, to ensure that any gasses trapped or formed between the two sheets are excluded. Optionally, the angle may be up to 90°. This step also has the effect of bonding the two sheets together to form the composite.

In step (c) the composite is placed in a vacuum forming mould and suitable conditions of temperature and pressure are applied to mould the article from the composite. These conditions are the conditions conventionally used in vacuum forming.

Also disclosed is a composite of a facing sheet of an acrylic material and a backing sheet of a thermoplastic material other than an acrylic material for use in making an article of sanitary ware, according to the method described above.

### BRIEF DESCRIPTION OF THE DRAWINGS

- **Figure 1**: is a schematic view of a first variation of the method of the invention; and
- **Figure 2**: is a schematic view of a second variation of the method of the invention.

### DESCRIPTION OF EMBODIMENTS

The crux of the invention is that an article is formed from a composite of a facing sheet of an acrylic material and a backing sheet of a thermoplastic material other than an acrylic material in a single moulding operation. In certain cases the resulting product is fully separable into its component parts for recycling.

The method of the invention will now be described in more detail.

A facing sheet of an acrylic material and a similar size sheet of a thermoplastic material other than an acrylic material are both heated to a temperature within the vacuum forming range, preferably a temperature of from 135°C to 195°C inclusive, more preferably at a temperature of from 155°C to 175°C inclusive, in, for example, a recirculating hot air oven. or by radiant heat or any other method.

Thereafter, the facing sheet and the backing sheet are brought together between a nip, for example between a pair of rollers or between a roller and a flat bed, at an angle such that any air or gas trapped or evolved between the two sheets is excluded.

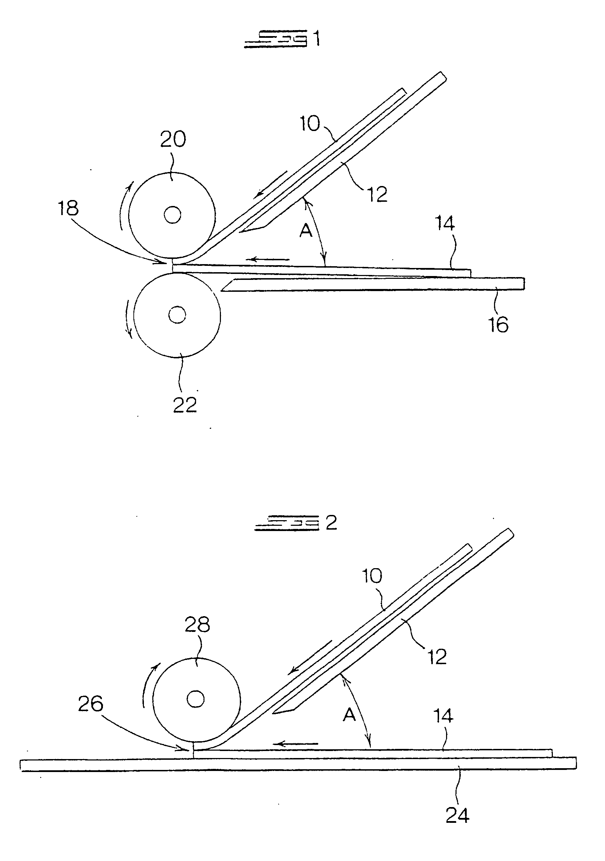

Referring to Figure 1, a first variation of the method of the invention is illustrated in which a heated facing sheet 10 is fed along a support surface 12 and a heated backing sheet 14 is fed along a support surface 16 to a nip 18 between a first roller 20 and a second roller 22 to bring the sheets 10, 14 together and to bond them to form the composite. From Figure 1 it can be seen that the angle of lamination indicated by the arrow A is between 35° and 45°. This angle ensures that any air or gas trapped or evolved between the two sheets 10. 14 is excluded.

Referring to Figure 2 there is shown a second variation of the method of the invention in which a heated facing sheet 10 supported on a support surface 12 and a heated backing sheet 14 supported on a flat bed 24 are brought together between a nip 26 between the flat bed 24 and a roller 28. Again the angle of lamination indicated by the arrow A is between 35° and 45°.

The rollers 20 and 22, and the roller 28 and flat bed 24 may be hand fed or motorised. Only a low pressure is required at the nip 18, 26, although higher pressures are also satisfactory, for example 20 kg mass on a roller 100 mm diameter x 700 mm long. The nip 18, 26 may be fixed or variable with the variability being provided either by spring loading or air or hydraulic cylinder or by the roller 20, 28 being a floating roller of suitable mass.

Generally, the lower roller 22 or the flat bed 24 must be formed of a material to which the backing sheet of a thermoplastic material will not stick, for example metal plating, polytetrafluoroethylene, or a bed of a wood based particle board.

The upper roller 20, 28 may be made of any suitable material, for example timber, rubber or metal.

An unexpected feature of the method of the invention is that the finish and nature of the upper roller 20, 22 is not critical, as even a rough surface. against all expectations, does not permanently mark the surface of the acrylic facing sheet or mar its cosmetic appearance. Any marks generated by the roller 20, 28 immediately deform back to an optically true surface. This is due to the strong thermo-elastic memory of an acrylic material at thermoforming temperatures, coupled with immediate vacuum forming.

When the rollers and/or flat bed are made of a thermally conductive material, the rollers and flat bed may also be provided with heating to minimise heat loss from the facing sheet and the backing sheet. Temperatures of from 30°C to about 100°C may be used. It is however not necessary to heat the rollers or flat bed and thus these may be made of thermally non-conductive materials such as for example timber.

The angle of lamination, i.e the angle at which the facing sheet and the backing sheet are brought together at the nip must be sufficient to permit the exclusion of any air or gas trapped or evolved between the two sheets. Typically an angle of from 35° to 45° inclusive has been found to be suitable, but an angle of up to 90° may be used.

It is preferred that touching of the facing sheet and the backing sheet prior to the nip is avoided, and the support surfaces or beds 12, 16 are designed to ensure that no touching occurs.

Once the composite has been formed, the composite is placed in a vacuum forming mould and suitable conditions of pressure are applied to mould the article from the composite. The conditions of pressure utilised are those which are conventional for vacuum forming.

For example, the pressure or vacuum to be used is a pressure or vacuum conventionally used in vacuum forming or moulding, preferably a vacuum of 30kPa.g. upwards, more preferably a vacuum of about 77kPa.g.

The formation of the moulding results from the vacuum created on the underside of the sheets, at the atmospheric pressure, pushing the softened sheets down into the mould.

In some cases a positive air pressure may be used rather than a vacuum. In such cases, pressures are up to 3 kg/cm² for a free blown dome. If the moulding is to be forced into a specific mould shape, there is potential to use higher pressures up to about 7 kg/cm².

There is no need for further heating of the composite and in fact further heating may be deleterious as there would be a danger of gas evolution between the sheets of the composite.

The method of the invention may be used to make articles from a facing sheet of an acrylic material of a wide range of thicknesses, typically, but not limited to from 2mm to 10mm inclusive, and from a backing sheet again with a wide range of thicknesses, typically, but not limited to from 2mm to 10mm inclusive. Such differing thicknesses may be utilised in specific formed articles to meet the requirements of differing standard test methods or service requirements.

Further, as the facing sheet and the backing sheet are separate prior to formation of the composite, the method of the invention allows great flexibility of production. A combination of differing colours and textures is easily and flexibly possible so as to provide for cosmetic variation of the final product.

The method of the invention may also be used with an acrylic material with a wide range of molecular weights, both with and without crosslinking, so that the articles may be made faced with for example sanitaryware grade high molecular weight cross-linked acrylic material or an easy shaping grade low molecular weight acrylic material. Bonding of such acrylic materials to the backing sheet is satisfactory over the range of materials.

The composite may he vacuum formed by conventional means to produce, in essentially a single operation, a finished article of acrylic, reinforced with a backing sheet.

The method of the invention is not limited to the use of two layers of material. Thus, for example, three or more layers may he simultaneously bonded by the same method, to produce an article consisting of a composite of for example a sheet of an acrylic material, then a sheet of a thermoplastic material other than an acrylic material, and then a further sheet of an acrylic material, so that both sides of the article have a show face of an acrylic material, with an internal reinforcement of a thermoplastic material.

Examples of suitable thermoplastic materials are ABS, PVC, polypropylene and polycarbonate, with the preferred material being ABS.

Examples of suitable acrylic materials are cell cast polymethylmethacrylate, both crosslinked and non-crosslinked, extruded polymethylmethacrylate. band cast polymethylmethacrylate, both crosslinked and non-crosslinked.

Typical articles which may be made by the method of the invention includes shower trays, sinks, bowls, basins, baths and other items of sanitaryware. Other items which may be manufactured by the method of the invention include vanity tops.

An important feature of the method of the invention is that when an article made by the method of the invention is reheated to a temperature of approximately 175°C to 185°C at the end of its lifespan the facing sheet and the backing sheet deform to revert back to essentially a flat sheet form because of the thermo-elastic memory of the acrylic material. The two sheets may then be mechanically parted and individually recycled by existing technology. For example when the backing sheet is ABS, a cellular layer is formed at the acrylic/ABS interface, thus giving a weak point "parting line" when the sheets are mechanically peeled apart. Further, for example, the acrylic material may he recycled to methylmethacrylate monomer for reconversion back into an acrylic material and. when the hacking material is ABS, the ABS may be reground as granules for blending with virgin ABS.

The method of the invention has various advantages. These include the fact that the method is environmentally friendly and exhibits high level of recyclability; unexpectedly, the method produces a cosmetically acceptable finish on the acrylic facing of the article with no roller marking; the method is versatile and flexible; the method utilises low cost technology and uses existing sheet production machinery and plant and existing vacuum forming tooling; the method permits the elimination of environmentally unfriendly GRP as a backing material; the method results in articles with an improved cosmetic appearance; and the method results in the production of articles as an essentially one step operation, reducing production costs and plant requirements.

An example of the invention will now be given.

A double howl sink unit was made, utilising a 3mm sanitaryware crosslinked cell cast acrylic with a satin finish cosmetic facing and 7mm ABS. The two sheets were heated to 175°C for 20 minutes in a radiant heat oven set at 185°C. Upon removal from the oven, the sheets were passed between a set of two rollers powered by a reduction geared electric motor and set at a nip gap of 8.8mm. On emerging from the rollers the bonded composite was clamped to a vacuum forming mould and vacuum applied to 30k Pa.g. The composite sheet formed into the mould, giving a full form into the mould corners and excellent definition. On cooling (assisted by fans) to 80°C the forming was removed from the mould, edge trimmed and drain holes drilled, thus completing the manufacture of the sink unit.

Subsequent service tests, for example to the requirements of ANSI Z 124,6 - 1990, showed excellent results.

It is noted that a plug assist to the formation of a sink bowl or bath gives particular advantage when vacuum forming these composites as it results in a greatly enhanced composite thickness in the base of the bowl or bath compared to unassisted vacuum forming. Increases of 50-70%, have been noted. In addition, against expectations, this plug assist proved not to cosmetically mar the acrylic surface, even when made from a rough. unheated timber composite, and for the same reason that the original roller bonding operation does not mark the acrylic surface - the acrylic's thermo-elastic memory combined with the vacuum operation.

## Claims

1. A method of making an article of sanitary ware from a composite of a facing sheet (10) of an acrylic material and a backing sheet (14) of a thermoplastic material other than an acrylic material, the method including the steps of:
(a) heating each of the facing sheet (10) and the backing sheet (14) to a temperature within the vacuum forming range;
(b) after step (a) bringing the facing sheet (10) and the backing sheet (14) together between a nip (18) to exclude any gasses trapped or formed between the two sheets (10, 14) and to bond the two sheets (10, 14) together to form the composite; and
(c) placing the composite in a vacuum forming mould and applying suitable conditions of pressure to mould the article from the composite.

2. A method according to claim 1 wherein the backing sheet (14) is a sheet of ABS.

3. A method according to claim 1 wherein the backing sheet (14) is a sheet of polyvinyl chloride, polypropylene or polycarbonate.

4. A method according to any one of claims 1 to 3 wherein in step (a) the facing sheet (10) and the backing sheet (14) are both heated to a temperature of from 135°C to 195°C inclusive.

5. A method according to any one of claims 1 to 4 wherein in step (b) the facing sheet (10) and the backing sheet (14) are brought together between a nip (18) between two rollers (20,22) or between a roller (28) and a flat bed (24), at an angle between 35 ° and 45 ° inclusive.

6. A method according to any one of claims 1 to 5 wherein in step (c) the composite is placed in a vacuum forming mould and a vacuum of 30kPa.g or greater is applied to mould the article from the composite.

## Patentansprüche

1. Verfahren zum Herstellen eines Sanitärerzeugnisgegenstandes aus einer Zusammensetzung aus einem Überzugblatt (10) aus einem Acrylmaterial und einem Stützblatt (14) aus einem anderen Thermoplastmaterial außer einem Acrylmaterial, wobei das Verfahren die folgenden Schritte aufweist:
(a) Erwärmen von jeweils dem Überzugblatt (10) und dem Stützblatt (14) auf eine Temperatur innerhalb eines Unterdruckausbildungsbereiches;
(b) nach dem Schritt (a) Zusammenbringen des Überzugblattes (10) und des Stützblattes (14) zwischen einem Spalt (18), um jegliche Gase, die zwischen den beiden Blättern (10, 14) eingeschlossen sind oder sich ausgebildet haben, auszuschließen und die beiden Blätter (10, 14) miteinander zu verbinden, um die Zusammensetzung auszubilden; und
(c) Anordnen der Zusammensetzung in einer Unterdruckausbildungsform und Aufbringen von geeigneten Druckzuständen, um den Gegenstand aus der Zusammensetzung auszuformen.

2. Verfahren gemäß Anspruch 1, wobei
das Stützblatt (14) ein Blatt aus ABS ist.

3. Verfahren gemäß Anspruch 1, wobei
das Stützblatt (14) ein Blatt aus Polyvinylchlorid, Polypropylen oder Polycarbonat ist.

4. Verfahren gemäß einem der Ansprüche 1 bis 3, wobei
bei Schritt (a) das Überzugblatt (10) und das Stützblatt (14) jeweils auf eine Temperatur von 125°C bis inklusive 195°C erwärmt werden.

5. Verfahren gemäß einem der Ansprüche 1 bis 4, wobei
bei Schritt (b) das Überzugblatt (10) und das Stützblatt (14) in einem Spalt (18) zwischen zwei Walzen (20, 22) oder zwischen einer Walze (28) und einem flachen Bett (24) unter einem Winkel zwischen 35° und inklusive 45° zusammengebracht werden.

6. Verfahren gemäß einem der Ansprüche 1 bis 5, wobei
bei Schritt (c) die Zusammensetzung in einer Unterdruckausbildungsform angeordnet wird und ein Unterdruck von 30 kPa.g oder größer aufgebracht wird, um den Gegenstand aus der Zusammensetzung auszuformen.

## Revendications

1. Un procédé de fabrication d'un article de produit sanitaire à partir d'un composite d'une feuille antérieure (10) d'un matériau acrylique et d'une feuille postérieure (14) d'un matériau thermoplastique autre qu'un matériau acrylique, le procédé comprenant les étapes consistant à :
(a) chauffer chacune de la feuille antérieure (10) et de la feuille postérieure (14) à une température dans la gamme de formation sous vide ;
(b) après l'étape (a), amener la feuille antérieure (10) et la feuille postérieure (14) conjointement entre un espace (18) pour exclure n'importe quel gaz emprisonné ou formé entre les deux feuilles (10, 14) et réunir les deux feuilles (10, 14) conjointement pour former le composite ; et
(c) placer le composite dans un moule de formation sous vide et appliquer des conditions appropriées de pression pour mouler l'article à partir du composite.

2. Un procédé selon la revendication 1, dans lequel la feuille postérieure (14) est une feuille d'ABS.

3. Un procédé selon la revendication 1, dans lequel la feuille postérieure (14) est une feuille de polychlorure de vinyle, de polypropylène ou de polycarbonate.

4. Un procédé selon l'une quelconque des revendications 1 à 3, dans lequel dans l'étape (a) la feuille antérieure (10) et la feuille postérieure (14) sont toutes deux chauffées à une température de 135° C à 195° C, bornes comprises.

5. Un procédé selon l'une quelconque des revendications 1 à 4, dans lequel dans l'étape (b) la feuille antérieure (10) et la feuille postérieure (14) sont amenées conjointement entre un espace (18) entre deux rouleaux (20, 22) ou entre un rouleau (28) et un lit plat (24), selon un angle compris entre 35° et 45°, bornes comprises.

6. Un procédé selon l'une quelconque des revendications 1 à 5, dans lequel dans l'étape (c) le composite est placé dans un moule de formation sous vide et on applique un vide de 30 kPa.g ou plus pour mouler l'article à partir du composite.
